# EUROPEAN PATENT APPLICATION

(11) **EP 4 545 611 A1**
(43) Date of publication of application: **30.04.2025**
(21) Application number: 23826785.0
(22) Date of filing: 18.04.2023
(51) Int. Cl.: C09D 11/36, C09D 11/322

(54) **OIL-BASED INKJET INK COMPOSITION**

(30) Priority: 24.06.2022 JP 2022101697
(71) Applicant: Sakata INX Corporation, Osaka-shi, Osaka 550-0002 (JP)
(72) Inventor: KINJOH,Jun, Osaka-shi, Osaka 550-0002 (JP); OKAMOTO,Takuya, Osaka-shi, Osaka 550-0002 (JP); KONO,Shun, Osaka-shi, Osaka 550-0002 (JP); NAKASHIMA,Okinori, Osaka-shi, Osaka 550-0002 (JP)
(74) Representative: Cabinet Beau de Loménie
(86) International application number: PCT/JP2023/015434
(87) International publication number: WO 2023/248596

(57) **Abstract**

This oil-based inkjet ink composition contains a pigment, a solvent, a binder resin and a pigment-dispersing agent. The solvent contains a higher fatty acid alkyl ester compound having 12-30 carbon atoms and contains substantially no mineral oil. The binder resin is an acrylic resin and/or a chlorinated polypropylene resin. The composition has a viscosity of 2 mPa · s to 30 mPa · s (at 25°C). The oil-based inkjet ink composition contains substantially no mineral oil, and is excellent in terms of ejection stability, low volatility and suppressing a decrease in OD value.

## Description

### TECHNICAL FIELD

The present invention relates to an oil-based inkjet ink composition.

### BACKGROUND ART

In the inkjet recording method, an inkjet ink having high fluidity is jetted as a droplet from a fine nozzle, and an image is recorded on a recording medium placed opposite to the nozzle. The ink jet recording method is rapidly spreading in recent years because high-speed printing can be performed with low noise. As inks used in such an inkjet recording method, together with water-based inks containing water as a main solvent, ultraviolet curable inks (UV inks) containing a polymerizable monomer as a main component in a high content, and hot melt inks (solid inks) containing a wax as a main component in a high content, so-called non-aqueous inks containing a non-aqueous solvent as a main solvent are known. Non-aqueous inks can be classified into solvent inks (solvent-based inks) in which the main solvent is a volatile organic solvent and oil-based inks (oily inks) in which the main solvent is a low volatile or nonvolatile organic solvent. Solvent inks are mainly dried on the recording medium by evaporation of the organic solvent, whereas oil-based inks are mainly dried by permeation into the recording medium.

Oils of oil-based inks are roughly classified into mineral oils and fatty acid esters, and examples thereof include those used alone and those used in mixture (see, for example, Patent Documents 1 to 3).

### PRIOR ART DOCUMENTS

### PATENT DOCUMENTS

Patent Document 1: JP-T-2002-501966
Patent Document 2: JP-A-2022-024421
Patent Document 3: JP-A-2017-088638

### SUMMARY OF THE INVENTION

### PROBLEMS TO BE SOLVED BY THE INVENTION

Regulations on mineral oils begin in Europe due to environmental issues, and thus mineral oil-free oil-based inks have been required. Oil-based inks are required to have low volatility in order to prevent nozzle clogging and the like, and have a problem of the concentration (OD value) being likely to decrease after landing because a permeable base material is used as the base material.

The present invention has been made in view of the above circumstances, and an object of the present invention is to provide an oil-based inkjet ink composition that is excellent in ejection stability, low volatility, and suppression of decrease in the OD value and does not substantially contain a mineral oil.

### MEANS FOR SOLVING THE PROBLEMS

[Item 1] That is, the present invention relates to an oil-based inkjet ink composition, containing: a pigment; a solvent; a binder resin; and a pigment dispersant, wherein the solvent contains a higher fatty acid alkyl ester compound having 12 to 30 carbon atoms and does not substantially contain a mineral oil, and the binder resin is an acrylic resin and/or a chlorinated polypropylene resin, and the oil-based inkjet ink composition has a viscosity of 2 mPa · s to 30 mPa · s (25°C).
[Item 2] The present invention also relates to the oil-based inkjet ink composition according to 1 above, wherein the higher fatty acid alkyl ester compound having 12 to 30 carbon atoms has a viscosity of 2 mPa · s to 15 mPa · s (25°C) .
[Item 3] The present invention also relates to the oil-based inkjet ink composition according to 1 or 2 above, wherein the chlorinated polypropylene resin has a chlorination degree of 20 to 50%.
[Item 4] The present invention also relates to the oil-based inkjet ink composition according to any one of 1 to 3 above, wherein the pigment is carbon black.

### EFFECT OF THE INVENTION

The mechanism of the action of the oil-based inkjet ink composition of the present invention is presumed as follows. However, the present invention is not limited to this mechanism of the action.

The oil-based inkjet ink composition of the present invention contains a pigment, a solvent, a binder resin, and a pigment dispersant, the solvent contains a higher fatty acid alkyl ester compound having 12 to 30 carbon atoms and does not substantially contain a mineral oil, the binder resin is an acrylic resin and/or a chlorinated polypropylene resin, and the oil-based inkjet ink composition has a viscosity of 2 mPa · s to 30 mPa · s (25°C). The higher fatty acid alkyl ester compound having 12 to 30 carbon atoms has excellent low volatility as an oil-based ink, the acrylic resin and/or the chlorinated polypropylene resin can suppress the decrease in the OD value, and the oil-based inkjet ink composition has a viscosity of 2 mPa · s to 30 mPa · s (25°C), and thus has excellent ejection stability.

### MODE FOR CARRYING OUT THE INVENTION

The oil-based inkjet ink composition of the present invention contains a pigment, a solvent, a binder resin, and a pigment dispersant, the solvent contains a higher fatty acid alkyl ester compound having 12 to 30 carbon atoms and does not substantially contain a mineral oil, the binder resin is an acrylic resin and/or a chlorinated polypropylene resin, and the oil-based inkjet ink composition has a viscosity of 2 mPa · s to 30 mPa · s (25°C) .

### <Pigment>

Examples of the pigment generally include inorganic, organic, and extender pigments that can be used in an ink composition containing an organic solvent. Examples of the inorganic pigment include titanium oxide, red iron oxide, antimony red, cadmium red, cadmium yellow, cobalt blue, Prussian blue, ultramarine blue, carbon black, and graphite. Examples of the organic pigment include a soluble azo pigment, an insoluble azo pigment, an azo lake pigment, a condensed azo pigment, a copper phthalocyanine pigment, and a condensed polycyclic pigment. Examples of the extender pigment include calcium carbonate, kaolin clay, barium sulfate, aluminum hydroxide, and talc. Among them, carbon black is preferable from the viewpoint of being excellent in suppressing the decrease in the concentration (OD value). As the carbon black, carbon black such as acidic carbon black or neutral carbon black can be used.

The content of the pigment is usually 0.01 to 20% by mass in the oil-based inkjet ink composition, and is preferably 1 to 15% by mass and more preferably 4 to 10% by mass from the viewpoint of printing concentration and ink viscosity.

### <Solvent>

The solvent contains a higher fatty acid alkyl ester compound having 12 to 30 carbon atoms and does not substantially contain a mineral oil. Herein, "not substantially containing a mineral oil" means that a mineral oil is not intentionally added when the oil-based inkjet ink composition is produced, and a trace amount of a mineral oil inevitably mixed during the production or storage of the oil-based inkjet ink composition may be contained. In this case, the mineral oil in the solvent is preferably 5,000 ppm or less, and more preferably 1,000 ppm or less.

Examples of the higher fatty acid alkyl ester compound having 12 to 30 carbon atoms include methyl myristate, ethyl myristate, propyl myristate, hexyl decanoate, heptyl decanoate, isooctyl nonanoate, heptyl nonanoate, isodecyl octanoate, octyl octanoate, nonyl octanoate, decyl hexanoate, cetyl isooctanoate, isocetyl laurate, isostearyl laurate, isocetyl myristate, isooctyl palmitate, isooctyl stearate, isononyl isonanoate, isodecyl isonanoate, methyl laurate, isopropyl laurate, butyl laurate, 2-ethylhexyl laurate, isopropyl palmitate, methyl oleate, ethyl oleate, isopropyl oleate, butyl oleate, methyl linoleate, ethyl linoleate, isobutyl linoleate, butyl stearate, isopropyl isostearate, 2-octyldecyl neopentanoate, 2-octyldodecyl neopentanoate, 2-ethylhexyl nonanoate, 6-methylheptyl nonanoate, 2-propylheptyl octanoate, and 2-ethylhexyl stearate. In the present invention, soybean oil fatty acid methyl, soybean oil fatty acid butyl, soybean oil fatty acid 2-ethylhexyl, tall oil fatty acid methyl, tall oil fatty acid isobutyl, linseed oil fatty acid methyl, linseed oil fatty acid 2-ethylhexyl, rice oil fatty acid butyl, and rice oil fatty acid 2-ethylhexyl that contain a higher fatty acid alkyl ester compound having 12 to 30 carbon atoms are also defined to be included in the higher fatty acid alkyl ester compound having 12 to 30 carbon atoms.

Among these, the higher fatty acid alkyl ester compound having 12 to 30 carbon atoms preferably has a viscosity of 2 mPa · s to 15 mPa · s (25°C) so that the oil-based inkjet ink composition has a viscosity in which the oil-based inkjet ink composition is not heated at the time of ejection. Specific examples thereof include methyl myristate, ethyl myristate, propyl myristate, hexyl decanoate, heptyl decanoate, isooctyl nonanoate, 2-ethylhexyl nonanoate, 6-methylheptyl nonanoate, heptyl nonanoate, isodecyl octanoate, 2-propylheptyl octanoate, octyl octanoate, nonyl octanoate, decyl hexanoate, methyl laurate, butyl laurate, 2-ethylhexyl laurate, isopropyl laurate, butyl stearate, 2-ethylhexyl stearate, soybean oil fatty acid methyl, soybean oil fatty acid butyl, soybean oil fatty acid 2-ethylhexyl, rice oil fatty acid butyl, and rice oil fatty acid 2-ethylhexyl. Among them, soybean oil fatty acid methyl, soybean oil fatty acid butyl, soybean oil fatty acid 2-ethylhexyl, or rice oil fatty acid butyl ester is preferably contained from the viewpoint of the solubility of the resin and the permeable base material such as a liner. The higher fatty acid alkyl ester compound having 12 to 30 carbon atoms preferably has 12 to 24 carbon atoms from the viewpoint of low volatility.

The content of the solvent can be used so that the viscosity of the oil-based inkjet ink composition will be about 2 mPa · s to 30 mPa · s (25°C), and for example, the content of the solvent is usually about 70 to 95% by mass and preferably 85 to 93% by mass in the oil-based inkjet ink composition from the viewpoint of the ejection property.

As the solvent, an organic solvent other than the higher fatty acid alkyl ester compound having 12 to 30 carbon atoms can be used in combination as long as the performance is not deteriorated. The content of the higher fatty acid alkyl ester compound having 12 to 30 carbon atoms is preferably 80% by mass or more, more preferably 90% by mass or more, further preferably 95% by mass or more, further preferably 98% by mass or more in the solvent.

### <Binder resin>

The binder resin is preferably an acrylic resin and/or a chlorinated polypropylene resin that are soluble in the higher fatty acid alkyl ester compound having 12 to 30 carbon atoms from the viewpoint of suppressing the decrease in the concentration (OD value) after landing.

An acrylic resin is a resin obtained by polymerizing a derivative of (meth) acrylic acid and a resin containing the derivative. Among them, the acrylic resin is preferably one having no cyclic structure.

The acrylic resin preferably has an acid value of 10 mgKOH/g or less. For the acid value, the catalog value of the manufacturer is used as a reference, but when the catalog value of the manufacturer is not available, the acid value can be calculated by neutralization titration method.

The acrylic resin preferably has a weight average molecular weight of 30,000 or more and 80,000 or less, and more preferably has a weight average molecular weight of 40,000 or more and 70,000 or less from the viewpoint of the concentration (OD value) after landing and the solubility in the solvent. For the weight average molecular weight, the catalog value of the manufacturer is used as a reference, but when the catalog value of the manufacturer is not available, the weight average molecular weight can be calculated by gel permeation chromatography (GPC) method. As an example, the weight average molecular weight in terms of polystyrene can be determined by performing chromatography using Water 2690 (manufactured by Waters Corporation) as a GPC instrument, and PLgel, 5 µ, MIXED-D (manufactured by Polymer Laboratories Inc.) as a column under the conditions of a tetrahydrofuran as a developing solvent, a column temperature of 25°C, a flow rate of 1 ml/min, an RI detector, a sample injection concentration of 10 mg/ml, and an injection volume of 100 µl.

From the viewpoint of solubility and the like and from the viewpoint of the blocking property, the acrylic resin preferably has a glass transition temperature of 40°C or more and 70°C or less. For the glass transition temperature, the catalog value of the manufacturer is used as a reference, but when the catalog value of the manufacturer is not available, the glass transition temperature is determined by differential scanning calorimetry (DSC). The glass transition temperature is usually calculated by the midpoint of the temperature range in which the glass transition occurs.

Examples of the commercially available product of the acrylic resin include "DYNAYAR BR-106" manufactured by Mitsubishi Chemical Corporation, "DEGALAN PM 602" manufactured by Evonik, and "DEGALAN LP 64/12" manufactured by Evonik.

A chlorinated propylene resin having a chlorination degree of 20 to 50% is suitably used. When the chlorination degree is within the above range, the chlorinated polypropylene resin has excellent compatibility with the solvent and excellent adhesiveness to the film. In the present invention, the chlorination degree is defined by the % by mass of chlorine atoms in the chlorinated polypropylene resin. The chlorinated polypropylene resin is preferably a modified or unmodified chlorinated polypropylene resin having a mass average molecular weight of 5000 to 200,000.

The content of the acrylic resin and/or the chlorinated propylene resin is preferably 1% by mass or more, more preferably 1.5% by mass or more in the oil-based inkjet ink composition from the viewpoint of improving the fixability with the base material and suppressing the decrease in the concentration (OD value) after landing, and is preferably 15% by mass or less, more preferably 10% by mass or less, further preferably 7% by mass or less, further preferably 4% by mass or less from the viewpoint of improving the ejection stability. That is, the content of the acrylic resin and/or the chlorinated propylene resin is preferably 1% by mass or more and 15% by mass or less, more preferably 1% by mass or more and 10% by mass or less, further preferably 1.5% by mass or more and 7% by mass or less, further preferably 1.5% by mass or more and 4% by mass or less in the oil-based inkjet ink composition from the viewpoint of improving the fixability with the base material, suppressing the decrease in the concentration (OD value) after landing, and improving the ejection stability.

In the oil-based inkjet ink composition, a resin that is soluble in the higher fatty acid alkyl ester compound having 12 to 30 carbon atoms can be used in combination as a binder resin other than the acrylic resin and/or the chlorinated propylene resin as long as the performance is not deteriorated. Examples of such a resin include a styrene-acrylic resin, a styrene-maleic acid resin, a rosin resin, a rosin ester resin, a petroleum resin, a coumarone indene resin, a terpene phenol resin, a phenol resin, a urethane resin, a melamine resin, a urea resin, an epoxy resin, a cellulose resin, a xylene resin, an alkyd resin, an aliphatic hydrocarbon resin, a butyral resin, a maleic acid resin, and a fumaric acid resin.

### <Pigment dispersant>

As the pigment dispersant, any pigment dispersant can be used without limitation as long as the pigment dispersant is a pigment dispersant used in an ink composition, and examples thereof include a hydroxyl group-containing carboxylic acid ester, a salt of a long chain polyaminoamide and a high molecular weight acid ester, a salt of a high molecular weight polycarboxylic acid, a salt of a long chain polyaminoamide and a polar acid ester, a high molecular weight unsaturated acid ester, a copolymer of vinylpyrrolidone and a long chain alkene, a modified polyurethane, a modified polyacrylate, a polyether ester type anionic activator, a polyoxyethylene alkyl phosphate ester, and a polyester polyamine.

Examples of the commercially available product of the pigment dispersant include "Antalon V216 (vinylpyrrolidine-hexadecene copolymer), V220 (vinylpyrrolidine-eicosene copolymer)" manufactured by ISP Japan (all trade names); "Solsperse 13940 (polyesteramine), 16000, 17000, 18000 (fatty acid amine), 11200, 24000, 28000" manufactured by Lubrizol Japan Ltd. (all trade names); "EFKA 400, 401, 402, 403, 450, 451, 453 (modified polyacrylate), 46, 47, 48, 49, 4010, 4055 (modified polyurethane)" manufactured by BASF Japan K.K. (all trade names); "DISPARLON KS-860, KS-873N4 (amine salt of polyester)" manufactured by Kusumoto Chemicals, Ltd. (all trade names); "DISCOL 202, 206, OA-202, OA-600 (multi-chain polymer non-ionic)" manufactured by DKS Co. Ltd. (all trade names); "DISPERBYK2155, 9077" manufactured by BYK JAPAN KK (all trade names); and "Hypermer KD2, KD3, KD11, KD12" manufactured by Croda Japan K.K. (all trade names).

The amount of the pigment dispersant is sufficient as long as the pigment can be sufficiently dispersed in the ink composition, and can be appropriately set. For example, the pigment dispersant can be blended at 0.1 to 5, preferably 0.3 to 1 relative to 1 of the pigment in mass ratio.

The total percentage of the pigment, the solvent, the binder resin, and the pigment dispersant is preferably 80% by mass or more, more preferably 90% by mass or more, and further preferably 95% by mass or more in the oil-based inkjet ink composition.

The oil-based inkjet ink composition of the present invention can contain various additives as necessary as long as the effects of the present invention are not impaired. Examples of the additives include a nozzle clogging inhibitor, an antioxidant, a conductivity modifier, a viscosity modifier, a surface tension modifier, and an oxygen absorber.

### <Method for producing oil-based inkjet ink composition>

The method for producing the oil-based inkjet ink composition of the present invention is not particularly limited. As an example, the oil-based inkjet ink composition can be produced by dispersing and mixing raw materials using a disperser such as a wet circulation mill, a bead mill, a ball mill, a sand mill, an attritor, a roll mill, an agitator, a Henschel mixer, a colloid mill, an ultrasonic homogenizer, a high pressure homogenizer (Microfluidizer, Nanomizer, Ultimizer, Genus PY, DeBEE2000 and the like), or a pearl mill, and adjusting the viscosity at 25°C to about 2 to 30 mPa · s when the oil-based inkjet ink composition is not heated at the time of ejection. In order to prevent the clogging at the head of the inkjet printer, the obtained ink composition is preferably filtered through a filter having a pore size of 3 µm or less after dispersion or dissolution of the binder resin.

The oil-based inkjet ink composition can be printed on a permeable paper base material such as a liner by an inkjet printer to form an inkjet image.

### EXAMPLES

Hereinafter, the present invention will be described more specifically with reference to Examples. The present invention is not limited to these Examples at all. Unless otherwise specified, "%" means "% by mass", and "part" means "part by mass".

### <Production of oil-based inkjet ink composition>

The materials of the pigment, the binder resin, the pigment dispersant, and the solvent were stirred and mixed according to the blending amounts shown in Table 1, and filtered through a (membrane) filter having a pore size of 3 µm to obtain oil-based inkjet ink compositions of Examples and Comparative Examples.

The materials shown in Table 1 are as follows.

### <Pigment>

MA7: Carbon black pigment, manufactured by Mitsubishi Chemical Corporation
MONARCH280: Carbon black pigment, manufactured by Cabot Corporation

### <Binder resin>

DYNAYAR BR-106: Acrylic resin (Tg: 47°C, Mw: 5,5000, acid value: 3.6 mgKOH/g), manufactured by Mitsubishi Chemical Corporation
DEGALAN PM602: Acrylic resin (Tg: 62°C, Mw: 6,4000, acid value: 6 mgKOH/g), manufactured by Evonik
SUPERCHLON 814HS: Chlorinated polypropylene resin, chlorination degree of 41%, manufactured by NIPPON PAPER INDUSTRIES CO., LTD.
SUPERCHLON 390S: Chlorinated polypropylene resin, chlorination degree of 36%, manufactured by NIPPON PAPER INDUSTRIES CO., LTD.
PENCELL D-135: Polymerized rosin resin, manufactured by Arakawa Chemical Industries,Ltd.

### <Pigment dispersant>

SOLSPERSE 18000: Dispersant, manufactured by Lubrizol Corporation

### <Solvent>

RIC-CIZER C-88: Fatty acid ester, manufactured by ITOH OIL CHEMICALS CO.,LTD.
TOSOLV-ME: Soybean oil fatty acid methyl, manufactured by Toshin Yushi Co.,Ltd.
EXCEPARL ML-85: Methyl laurate, manufactured by Kao Corporation
EXCEPARL TD-S: Isotridecyl stearate, manufactured by Kao Corporation
Methyl decanoate: manufactured by TOKYO CHEMICAL INDUSTRY CO., LTD.
MORESCO WHITE P-55: Hydrocarbon solvent, manufactured by MORESCO Corporation

Using each oil-based inkjet ink composition of Examples and Comparative Examples obtained above, the following evaluations were performed.

### <Evaluation of viscosity>

The viscosity (mPa · s) of the ink compositions for oil-based inkjet at 25°C was measured using a viscometer (RE 100 L type manufactured by TOKISANGYO).

### <Evaluation of ejection stability>

Printing was performed on liner paper (trade name: K Liner (210 g/m²), manufactured by Oji Paper Co., Ltd.) using the ink compositions for oil-based inkjet, and evaluation was performed based on the number of sheets on which an unprinted part was generated. ∘ or △ means acceptable, and ∘ is preferable.

### [Evaluation criteria]

∘: An unprinted part is generated after the 71st sheet, or an unprinted part is not generated up to the 100th sheet.
△: An unprinted part is generated in the 51st to 70th sheets.
×: An unprinted part is generated in the 31st to 50th sheets.
××: An unprinted part is generated within the first 30 sheet.

### <Evaluation of suppression of decrease in OD value>

Printing was performed on liner paper (trade name: K Liner (210 g/m²), manufactured by Oji Paper Co., Ltd.) using the ink compositions for oil-based inkjet, the OD values after ejection and after 24 hours were measured using a spectrophotometer (trade name: "Spectro Eye", manufactured by X-Rite, Incorporated), and evaluation was performed based on the OD value change rate. o or △ means acceptable, and ∘ is preferable.

### [Evaluation criteria]

∘: The OD value change rate is less than 10%.
△: The OD value change rate is 10% or more and less than 15%.
×: The OD value change rate is 15% or more.

<Evaluation of low volatility>

The ink composition for oil-based inkjet was placed in a petri dish having a diameter of 4 cm, and left to stand under an environment of 40°C for 14 days, and evaluation was performed based on the weight change rate before and after leaving to stand. ∘ or △ means acceptable, and ∘ is preferable.

### [Evaluation criteria]

∘: The weight change rate is less than 5%.
△: The weight change rate is 5% or more and less than 7%.
×: The weight change rate is 7% or more.

**[Table 1]**

| | Product name | Component name | Example 1 | Example 2 | Example 3 | Example 4 | Example 5 | Example 6 | Example 7 | Example 8 | Example 9 | Compara tive Example 1 | Compara tive Example 2 | Compara tive Example 3 | Compara tive Example 4 | Compara tive Example 5 |
|---|---|---|---|---|---|---|---|---|---|---|---|---|---|---|---|---|
| Solvent | RIC-CIZER C-88 | Fatty acid ester | 70.00% | 89.00% | 70. 00% | 89.00% | 89.00% | 89.00% | 90.50% | 84.00% | 89.00% | | 89.00% | | | 49.00% |
| | TOSOLV-ME | Soybean oil fatty acid methyl | | | | | | | | | | | | | | |
| | EXCEPARL ML-85 | Methyl laurate | 19.00% | | 19. 00% | | | | | | | | | | | |
| | - | Methyl decanoate | | | | | | | | | | | | 89.00% | | |
| | EXCEPARL TD-S | Isotridecyl stearate | | | | | | | | | | | | | 90.50% | 40. 00% |
| | MORESCO WHITE P-55 | Hydrocarbon solvent | | | | | | | | | | 91.00% | | | | |
| Binder resin | DYNAYAR BR-106 | Acrylic resin | 2.00% | 2.00% | 2.00% | 2.00% | | | 0.50% | 7.00% | | | | 2.00% | 0.50% | 2.00% |
| | Degalan PM602 | Acrylic resin | | | | | | | | | 2.00% | | | | | |
| | SUPERCHLON 390S | Chlorinated propylene resin | | | | | 2.00% | | | | | | | | | |
| | SUPERCHLON 814HS | Chlorinated propylene resin | | | | | | 2.00% | | | | | | | | |
| | PENCELL D-135 | Polymerized rosin resin | | | | | | | | | | | 2.00% | | | |
| Pigment | MA7 | Carbon black pigment | 6. 00% | 6.00% | 6.00% | | | | 6.00% | 6.00% | 6.00% | 6.00% | 6.00% | 6.00% | 6.00% | 6.00% |
| | MONARCH280 | Carbon black pigment | | | | 6. 00% | 6.00% | 6.00% | | | | | | | | |
| Pigment dispersant | SOLSPERSE 18000 | Dispersant | 3.00% | 3.00% | 3.00% | 3.00% | 3.00% | 3.00% | 3.00% | 3.00% | 3.00% | 3.00% | 3.00% | 3.00% | 3.00% | 3.00% |
| Total | | | 100% | 100% | 100% | 100% | 100% | 100% | 100% | 100% | 100% | 100% | 100% | 100% | 100% | 100% |
| Evaluation | | Viscosity (mPa · s) | 9 | 10 | 10 | 10 | 10 | 9 | 8 | 20 | 10 | 8 | 9 | 9 | 35 | 35 |
| | | Ejection stability | ○ | ○ | ○ | ○ | ○ | ○ | ○ | △ | ○ | ○ | ○ | ○ | × | × |
| | | Suppression of decrease in OD value | ○ | ○ | ○ | ○ | ○ | ○ | ○ | ○ | ○ | × | × | ○ | △ | ○ |
| | | Low volatility | △ | ○ | ○ | ○ | ○ | ○ | ○ | ○ | ○ | ○ | ○ | × | ○ | ○ |

## Claims

1. An oil-based inkjet ink composition, comprising: a pigment; a solvent; a binder resin; and a pigment dispersant,
wherein the solvent contains a higher fatty acid alkyl ester compound having 12 to 30 carbon atoms and does not substantially contain a mineral oil,
the binder resin is an acrylic resin and/or a chlorinated polypropylene resin, and
the oil-based inkjet ink composition has a viscosity of 2 mPa · s to 30 mPa · s (25°C).

2. The oil-based inkjet ink composition according to claim 1, wherein the higher fatty acid alkyl ester compound having 12 to 30 carbon atoms has a viscosity of 2 mPa · s to 15 mPa · s (25°C).

3. The oil-based inkjet ink composition according to claim 1 or 2, wherein the chlorinated polypropylene resin has a chlorination degree of 20 to 50%.

4. The oil-based inkjet ink composition according to claim 1 or 2, wherein the pigment is carbon black.
